# EUROPÄISCHE PATENTSCHRIFT

(11) **EP 0 806 849 B1**
(45) Veröffentlichungstag und Bekanntmachung des Hinweises auf die Patenterteilung: **23.05.2007**
(21) Anmeldenummer: 97106625.3
(22) Anmeldetag: 22.04.1997
(51) Int. Cl.: H04B 17/00

(54) **Schaltungsanordnung zur Funktionsprüfung mobiler Rundfunkempfangsanlagen**
Circuit arrangement for performance check of mobile broadcast reception systems
Circuit pour le contrôle du bon fonctionnement de systèmes de réception mobiles

(30) Priorität: 07.05.1996 DE 19618333
(43) Veröffentlichungstag der Anmeldung: 12.11.1997
(73) Patentinhaber: FUBA Automotive GmbH & Co. KG, 31162 Bad Salzdetfurth (DE)
(72) Erfinder: Lindenmeier, Heinz, 82152 Planegg (DE); Hopf, Jochen, 85540 Haar (DE); Reiter, Leopold, 82205 Gilching (DE)

(56) Entgegenhaltungen:
- US-A- 4 149 122
- US-A- 4 984 293

## Beschreibung

Die Erfindung betrifft eine mobile Empfangsanlage, bestehend aus mindestens einer Empfangsantenne, welche mit einem Überlagerungsempfänger, der mit Spiegelfrequenzunterdrükkung und mit einer Meßeinrichtung zur Feststellung des Empfangspegels versehen ist, hochfrequenzmäßig verbunden ist.

Bei mobilen Empfangsanlagen besteht häufig die Notwendigkeit, eine Funktionsprüfung der gesamten Rundfunkempfangsanlage durchzuführen. Beim praktischen Einsatz besteht häufig das Problem, daß der Überlagerungsempfänger, die Zuleitung zwischen Antenne und Empfänger, oder die Antennenanlage z.B. auch nur einen teilweisen Qualitätsverlust durch Alterung erleiden, ohne im Betrieb eindeutig festgestellt werden zu können. Außerdem wird eine einfach durchführbare Funktionsprüfung auch häufig bei der Herstellung und Montage der Rundfunkempfangsanlage gefordert. Es ist deshalb wünschenswert, die Anlage in einen Prüfungsmodus umschalten zu können, um dabei die Funktion zu prüfen. Insbesondere auch bei komplizierten Empfangsanlagen mit mehreren Antennen und Diversityeinrichtungen ist die Einzelprüfung der Komponenten auf Grund der häufig komplizierten Zugänglichkeit dieser Komponenten äußerst aufwendig. Nach dem Stande der Technik werden im Prüfungsmodus Prüfsignale verwendet, mit denen die Komponenten der Anlage bzw. die Kettenschaltung der Komponenten hinsichtlich ihrer Funktion geprüft werden.

Die Patentschrift US-4984293 beschreibt eine Schaltungsanordnung zur Funktionsprüfung eines Mikrowellenempfängers. Die Anordnung enthält einen Überlagerungsempfänger wobei ein Testsignal mittels einem datenmodulierten Signal und einem lokalen Oszillatorsignal erzeugt wird und auf den Eingang des Empfängers eingekoppelt wird.

Aufgabe der Erfindung ist es deshalb, eine Schaltunganordnung anzugeben, welche bei einer mobilen Empfangsanlage gemäß dem Oberbegriff des Anspruchs 1 eine Funktionsprüfung der mobilen Empfangsanlage auf den Empfangsfrequenzen ermöglicht, auf die der Überlagerungsempfänger jeweils eingestellt ist und daß andere Funkeinrichtungen durch die Prüfsignale möglichst wenig gestört werden.

Diese Aufgabe wird erfindungsgemäß durch den kennzeichnenden Teil des Anspruchs 1 gelöst.

Ein besonderer Vorteil einer Anordnung nach der Erfindung besteht darin, daß ausschließlich ein diskretes Prüfsignal auf der Frequenz ausgesendet wird, auf die der Empfänger abgestimmt ist. Dadurch ist sichergestellt, daß im Prüfmodus die Empfangsfrequenz auf einer Frequenzlücke gewählt werden kann, welche im Empfänger hörbar als nicht mit einem Empfangssignal belegt erscheint. Insbesondere bei Autoradioempfangsanlagen ist es notwendig, daß die Anlage an jedem beliebigen Empfangsort mit jeder beliebigen Signalbelegung des Frequenzbereichs durch Rundfunksender oder ähnlichem in ihrer Funktion überprüft werden kann. Ferner ist dadurch sichergestellt, daß das Prüfsignal durch Wahl einer Senderlücke ausschließlich auf dieser Frequenz ausgesendet wird, auf die benachbarte Empfangssysteme nicht abgestimmt sind und somit die Gefährdung der Störung anderer Empfangsanlagen ausgeschlossen ist. In der Praxis können in den Rundfunkbändern jeweils eine Vielzahl von Senderlücken gefunden werden, sodaß über diese punktuelle Funktionsüberprüfung über das gesamte Frequenzband geprüft werden kann.

Die Erfindung wird im folgenden anhand der Figuren näher beschrieben. Es zeigen:

Fig. 1: Mobile Empfangsanlage mit Überlagerungsempfänger 1, mit Schaltungsanordnung 2, welcher das Oszillatorsignal 8 des Überlagerungsempfängers 1 zugeführt ist, mit Oszillator 7 auf der Zwischenfrequenz des Empfängers, einem Frequenzumsetzer 3 und der im wesentlichen kapazitiv wirkenden Koppeleinrichtung 33 zur Empfangsantenne 5, welche das HF-Ausgangssignal 12 (Prüfsignal) aufnimmt. Die Funktion der Anlage erfolgt durch Anzeige des Zwischenfrequenzsignals im Überlagerungsempfänger.

Fig. 2: Mobile Empfangsanlage wie in Fig. 1 mit im Empfänger 1 implementierter Schaltungsanordnung 2, jedoch mit einem durch Selbsterregung der Anlage mit Regeleinrichtung 17 (Begrenzer) erzeugtem HF-Ausgangssignal 12

Fig. 3: Mobile Empfangsanlage nach Fig. 1 jedoch mit Zuführung des Oszillatorsignals 8 zur Schaltungsanordnung 2 über die HF-Verbindungsleitung (Antennenleitung) 14 und mit einer Filtereinrichtung 4 zur Unterdrückung der Spiegelfrequenz.

Fig. 4: Mobile Empfangsanlage mit Antennen-Diversity-Einrichtung und selektiver Prüfbarkeit der einzelnen Diversityantennen 5,5',5" durch Umschalten der Umschalter 26 vom Diversity-Modus in den Prüfmodus. Die selektive Prüfung erfolgt mit Schaltsignalgenerator 31, dem Schaltsignalauswerter 27 in der Schaltungsanordnung 2, welcher den Antennenumschalter 24 sequentiell weiterschaltet.

Fig. 5: Mobile Empfangsanlage nach Fig. 2, jedoch mit Zuführung des Oszillatorsignals 8 und des Zwischenfrequenzsignals 11 des Überlagerungsempfängers zur Schaltungsanordnung 2 über die Antennenleitung 14 und mit Signalweichen 16 bzw. 18 zur Einkopplung bzw. Auskopplung dieser Signale.

Fig. 6: Mobile Empfangsanlage wie in Fig. 4, jedoch mit nur einer Hochfrequenzverbindung 14 zwischen der beim Diversity-Prozessor angebrachten Schaltungsanordnung und dem Überlagerungsempfänger.

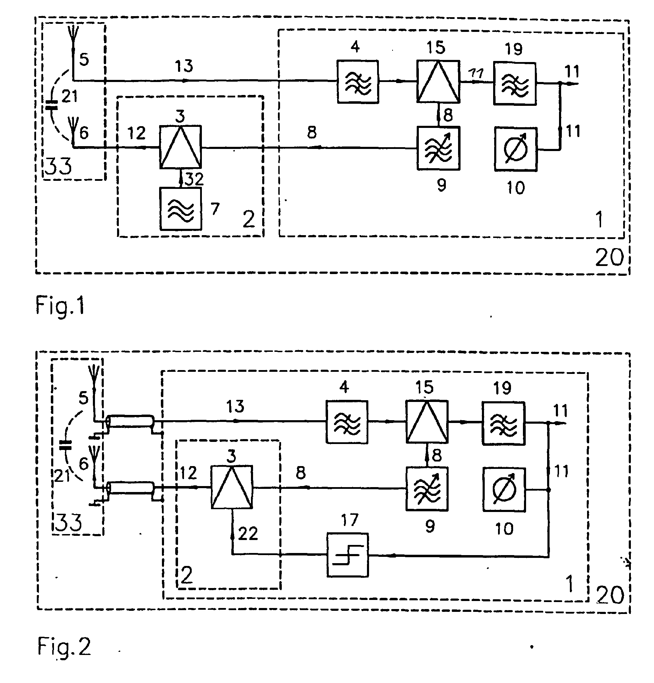

In Fig. 1 ist die aus Empfangsantenne 5 und dem Überlagerungsempfänger 1 bestehende Rundfunkempfangsanlage 20 dargestellt. Der Überlagerungsempfänger 1 ist mit der Empfangsantenne 5 hochfrequent verbunden. Das Oszillatorsignal 8 des Überlagerungsempfängers 1, welches im Oszillator 9 des Empfängers erzeugt wird, wird bei erfindungsgemäßen Schaltungsanordnungen einem Frequenzumsetzer 3, welcher in der Schaltungsanordnung 2 angeordnet ist, zugeführt. Dem Frequenzumsetzer 3 wird zusätzlich eine ZF-Trägerschwingung 32 zugeführt, deren Frequenz der Mittenfrequenz des ZF-Signals 11 des Überlagerungsempfängers möglichst nahe kommt. Im Frequenzumsetzer 3 entsteht somit ein HF-Ausgangssignal 12 (Prüfsignal), dessen Frequenz sich aus der Oszillatorfrequenz des Überlagerungsempfängers und der ZF-Trägerschwingung 32 ergibt und damit der Empfangsfrequenz entspricht, auf die der Überlagerungsempfänger abgestimmt ist, so, daß es zumindest innerhalb der Auswertebandbreite des Pegelmessers 10 liegt.

Über die Koppeleinrichtung 33 wird das HF-Ausgangssignal 12 des Frequenzumsetzers 3 mit definierter Amplitude lose, z. B. über eine kapazitive Kopplung 21, auf die Empfangsantenne 5 oder direkt auf den Empfängereingang eingekoppelt. Durch die im Überlagerungsempfänger zwangsweise vorhandene Spiegelfrequenzunterdrückung 4 zur Vermeidung des Spiegelfrequenzempfangs wird auch die zwangsweise im Frequenzumsetzer 3 entstehende Spiegelfrequenz unterdrückt. Im Überlagerungsempfänger 1 wird das Empfangssignal 13 mit Hilfe des Oszillatorsignals 8 in einem Mischer 15 auf die Zwischenfrequenz umgesetzt. Das Zwischenfrequenzsignal 11 passiert das ZF-Filter 19. Die Meßeinrichtung 10 zur Feststellung des Empfangspegels ermöglicht somit die Messung des Empfangspegels auf der Empfangsfrequenz, da das Zwischenfrequenzsignal 11 ein genaues Abbild des Empfangssignals ist, solange keine Begrenzung bzw. Regelung des Empfangspegels im Empfänger bis zur Meßeinrichtung 10 erfolgt. Dieser Meßpegel kann nun nach dem Stande der Technik mit einem Sollwert verglichen werden. Liegt der Meßpegel in einem vorgegebenen Bereich des Sollwerts, ist somit die Funktionstüchtigkeit der Empfangsanlage 20 festgestellt.

Mit der erfindungsgemäßen Schaltungsanordnung können vorteilhaft eine Vielzahl von Funktionsprüfungen durchgeführt werden: z.B. ob der Überlagerungsempfänger korrekt arbeitet, ob sämtliche Verbindungen, z.B. HF-Verbindungsleitungen oder sonstige Signalleitungen zwischen Empfangsantenne, Schaltungsanordnung und Empfänger geschlossen sind, ob die Versorgungsspannung z.B. an der Schaltungsanordnung oder an vorhandenen Antennenverstärkern anliegt, ob ein gegebenenfalls vorhandener Antennenverstärker arbeitet, ob bei Mehrantennen-Diversity-Einrichtungen der Antennenumschalter einwandfrei funktioniert oder ob bei auf die Scheibe gedruckten oder in das Verbundglas eingelegten Antennenstrukturen Leiterunterbrechungen gegeben sind.

Das Ergebnis der Funktionsüberprüfung kann auf bekannte Weise entweder per Meßprotokoll festgehalten oder über ein Display oder akustisch angezeigt werden oder in einer Kombination der Anzeigemöglichkeiten erfolgen. Die für je nach Prüfumfang erforderlichen Sollwerte für die unterschiedlichen Frequenzstützpunkte können dabei in einem Speicher der mobilen Rundfunkempfangsanlage oder in einem Datenspeicher außerhalb des Fahrzeugs vorliegen. Im letzteren Fall ist dann eine Datenleitung zwischen externem Datenspeicher und der mobilen Empfangsanlage bei der Funktionsüberprüfung erforderlich. Der Vergleich der Soll- und Ist-Werte und die daraus resultierende Entscheidung, ob die Empfangsanlage wunschgemäß arbeitet, wird dann zweckmäßig ebenfalls in einer externen, also vom Empfänger abgesetzt betriebenen und über eine Datenleitung verbundenen Testeinheit erfolgen.

Die ZF-Trägerschwingung 32 kann bei erfindungsgemäßen Schaltungsanordnungen auf besonders einfache Weise mittels eines auf der Zwischenfrequenz des Überlagerungsempfängers schwingenden Oszillators 7 erzeugt werden. Da die Amplitude des die ZF erzeugenden Oszillators 7 konstant ist und die Amplitude des empfängerseidgen Oszillators 9 ebenfalls konstant ist oder über einen Begrenzerverstärker konstant gehalten wird, ergibt sich am Ausgang des Frequenzumsetzers 3 ebenfalls ein in der Amplitude konstantes, also definiertes HF-Ausgangssignal 12.

Der Frequenzumsetzer 3 wird in seiner einfachsten Ausführungsform durch eine Serien- oder Paralleldiode gebildet. Vorteilhafter verwendet man als Frequenzumsetzer 3 einen Transistor als additive bzw. multiplikative Mischstufe, da durch die durch den Transistor gegebene Entkopplung zwischen Ein- und Ausgang das 12 auf einfache Weise über einen angeschalteten Schwingkreis selektiv abgegriffen werden kann. Verwendet man als Frequenzumsetzer 3 eine Transistor-Gegentaktmischstufe, so können die Anforderungen an die Amplitudenkonstanz des dem Frequenzumsetzer 3 zugeführten Oszillatorpegels deutlich reduziert werden. Der über den Abstimmbereich der Oszillatorfrequenz jeweils erzeugte Oszillatorpegel muß dabei stets so groß sein, daß die Gegentaktmischstufe im Schaltbetrieb arbeitet. Liegen die Amplitudenschwankungen des Oszillatorsignals 8 oberhalb dieses zum Schaltbetrieb führenden Ozillatorpegels, so hat dies keinen Einfluß auf die Amplitude des HF-Ausgangssignals 12, so daß z.B. ein Begrenzer-Verstärker für das Oszillatorsignal entfallen kann. Zusätzlich werden am Ausgang der Gegentaktmischstufe unerwünschte Signalanteile unterdrückt, so daß über die Koppeleinrichtung 33 eine unerwünschte Abstrahlung von unerwünschten Signalanteilen unterbleibt. Die Unterdrückung unerwünschter Signalanteile am Ausgang des Frequenzumsetzers 3 wird bei Verwendung eines "Double Balanced Mixer"s (doppelt symmetrisch ausgeführte Mischstufe) noch verstärkt, da sowohl die ZF-Trägerschwingung 32 als auch das Oszillatorsignal 8 am Ausgang durch die Gegentaktaussteuerung kompensiert werden. Solche doppelt symmetrische Mischstufen sind als "Vier-Quadranten-Multiplizierer" in Form von integrierten Schaltungen oder als Ringmischer in aktiver oder passiver Ausführung erhältlich.

Besonders vorteilhaft kann von der Erfindung Gebrauch gemacht werden, wenn verschiedene Rundfunksignale empfangen werden sollen. Durch einfaches Umschalten der die ZF-Trägerschwingung 32 bestimmenden Bauelemente des Oszillators 7 in der Schaltungsanordnung 2 können verschiedene ZF-Trägerschwingungen erzeugt werden. Soll z.B. eine mobile Rundfunkempfangsanlage 20 zum Empfang des amplitudenmodulierten Lang-, Mittel- und Kurzwellenbereichs in ihrer Funktion überprüft werden, wählt man als ZF-Trägerschwingung 32 die Zwischenfrequenz des AM-Empfängers, die üblicherweise bei 455 kHz liegt. Im Fall des Empfangs frequenzmodulierter Rundfunksignale des UKW-Bereichs wählt man typisch 10.7 MHz als ZF-Trägerschwingung 32. Zur Funktionsüberprüfung von mobilen Empfangsanlagen zum Empfang von Fernsehsignalen wählt man die Bildträgerzwischenfrequenz (typisch 38.9 MHz) oder die Tonträgerzwischenfrequenz (33.4MHz) oder den Farbhilfsträger.

Die ZF-Trägerschwingung 32 kann auch dadurch erzeugt werden, daß ein Verstärker mit extrem hoher Verstärker eingesetzt wird, der an seinem Eingang nicht mit einem Signal angesteuert wird und an dessen Ausgang ein Resonanzkreis als Ausgangsfilter angeschlossen ist, dessen Eigenfrequenz der ZF-Mittenfrequenz des Überlagerungsempfängers möglichst nahe kommt, und daß das aus dem Eigenrauschen des Verstärkers herausgefilterte Signal die ZF-Trägerschwingung 32 bildet.

Schaltungsanordnung 2, Koppeleinrichtung 33 und Überlagerungsempfänger können in enger räumlicher Nachbarschaft angeordnet sein, wodurch der erforderliche Verbindungsaufwand zwischen den einzelnen Komponenten extrem klein bleibt. Eine solche Anordnung erfordert jedoch entsprechend große Einbauräume, die im modernen Automobilbau nur selten zur Verfügung stehen.

Sind diese großen erforderlichen Einbauräume nicht vorhanden, integriert man vorteilhaft die Schaltungsanordnung 2 in den Überlagerungsempfänger 1 und führt das 12 des Frequenzumsetzers 3 über eine Hochfrequenzleitung zur Koppeleinrichtung 33, wie dies Fig. 2 zeigt.

Die die ZF-Trägerschwingung 32 erzeugende Baugruppe in Form des ZF-Oszillators 7 kann entfallen, wenn mittels der Schaltungsanordnung 2 erfindungsgemäß eine Selbsterregung der Empfangsanlage 20 bewirkt wird wie dies Fig. 2 zeigt. Geht man davon aus, daß bei der Funktionsüberprüfung zunächst ein nicht belegter Empfangskanal als Prüffrequenz ausgewählt wird, so wird ein Rauschsignal empfangen. Bei Umschaltung der mobilen Empfangsanlage auf den Betrieb der Funktionsüberprüfung wird zunächst das im Zwischenfrequenzverstärkerteil des Überlagerungsempfängers vorhandene Zwischenfrequenzsignal 11 mit Rauschcharakter einer Regeleinrichtung in Form eines Amplitudenbegrenzers 17 zugeführt, welches als in seiner Amplitude begrenztes ZF-Signal 22 dem Frequenzumsetzer 3 zugeführt wird. Dieser Amplitudenbegrenzer 17 ist z.B. bei frequenzmodulierten Empfangssignalen stets im Überlagerungsempfänger 1 in Form einer meist integrierten Schaltung vorhanden. Ist die Schleifenverstärkung der gesamten Empfangsanlage 20 hinreichend groß gewählt, so liegt der Zustand der Selbsterregung vor, da sich die Phasenbedingung für die Selbsterregung durch die bandbegrenzende Wirkung der ZF-Selektion für Signale mit Rauschcharakter von selbst ein- ' stellt. Die Meßeinrichtung 10 zur Feststellung des Empfangspegels sollte in diesem Fall den RMS (root mean square)-Wert erfassen.

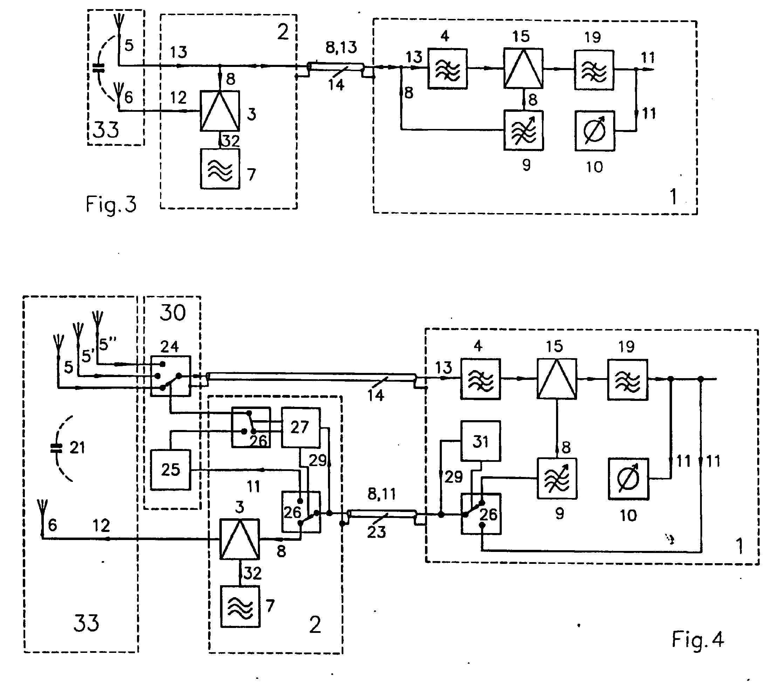

Fig. 3 zeigt eine erfindungsgemäße Empfangsanlage, bei der der Überlagerungsempfänger 1 mit der Schaltungsanordnung 2 nur über die Antennenleitung 14 verbunden ist. Diese HF-Verbindungsleitung - in der Regel als koaxiale Leitung ausgeführt - leitet das von der Empfangsantenne 5 aufgenommene Empfangssignal 13 an den Überlagerungsempfänger 1 weiter und führt zugleich das Oszillatorsignal 8 des Überlagerungsempfängers 1 zur Schaltungsanordnung 2. Hierbei wird vorausgesetzt, daß die Eingangsimpedanz des Filters 4 zur Spiegelfrequenzunterdrückung das Oszillatorsignal durch geeignete Dimensionierung nicht zu stark abschwächt, andererseits das Oszillatorsignal 8 am Ausgang des Filters zur Spiegelfrequenzunterdrückung ausreichend unterdrückt wird. Beides ist durch geeignete Dimensionierung nach dem Stand der Technik auf einfache Weise möglich.

Bei einer vorteilhaften Einstellung der Pegelverhältnisse wird das Oszillatorsignal 8 dominierend gewählt, so daß es das Empfangssignal 13 um mindestens eine Zehnerpotenz übersteigt. Dies wird dadurch erreicht, daß durch geeignete Dimensionierung des Konversionsgewinns bzw. der Mischdämpfung im Frequenzumsetzer 3 und durch Feststellung der Koppeldämpfung in der Koppeleinrichtung 33 die geforderten Pegelverhältnisse eingestellt werden. Damit wird auch das HF-Ausgangssignal 12 in seiner Amplitude allein durch das dominierende Oszillatorsignal 8 und durch die Amplitude der ZF-Trägerschwingung 32 bestimmt.

Die Koppeleinrichtung 33 besteht erfindungsgemäß aus der Empfangsantenne 5, auf die das HF-Ausgangssignal 12 des Frequenzumsetzers 3 z.B. über eine elektromagnetische Welle lose eingekoppelt wird. Das HF-Ausgangssignal 12 wird z.B. einer Sendeantenne 6 zugeführt. Diese Sendeantenne 6 kann dabei an einer geeigneten Stelle des Kraftfahrzeugs angebracht sein und strahlt das HF-Ausgangssignal 12 ab. Ist die Empfangsantenne 5 als Scheibenantenne ausgeführt, ist es besonders vorteilhaft, die Sendeantenne 6 und die Empfangsantenne in einem Arbeitsgang im Siebdruckverfahren bei ESG-Scheiben oder als eingelegte Drähte bei VSG-Scheiben herzustellen. Die Koppeldämpfung der Koppeleinrichtung 33 richtet sich dabei im wesentlichen nach der räumlichen Distanz der Sende- und Empfangsantenne und nach deren Wirkungsprinzip. Kapazitive Antennen sind bevorzugt kapazitiv anzuregen, magnetisch wirkende Antennen bevorzugt induktiv anzukoppeln.

Eine erfindungsgemäße Koppeleinrichtung 33 kann auch darin bestehen, daß das HF-Aüsgangssignal 12 über eine kleine Koppelkapazität (z.B. wenige pF im UKW-Bereich) dem Anschluß der Empfangsantenne zugeführt wird.

Das HF-Ausgangssignal 12 kann insbesondere bei als Scheibenantennen ausgeführten Empfangsantennen auf eine auf die Scheibe gedruckte HF-Leitung eingespeist werden. Liegen z.B. mehrere Empfangsantennenanschlüsse auf einer Seite der Scheibenberandung, wie dies für Mehrantennen-Diversity-Systeme der Fall sein kann, so wird die HF-Leitung z.B. in Form einer unsymmetrischen Koplanarleitung ebenfalls an dieser Scheibenberandung gedruckt und z.B. mittels Verzweigungen über kurze Strecken entlang der Antennenstrukturen geführt, so daß das HF-Ausgangssignal im wesentlichen kapazitiv auf die Empfangsantennenstrukturen eingekoppelt wird. Die gedruckte HF-Leitung wird dabei zweckmäßig an ihrem Ende mit ihrem Wellenwiderstand abgeschlossen, um annähernd konstanten Strom- und Spannungsbelag längs der gedruckten HF-Leitung zu erhalten.

Bei Mehrantennen-Scanning-Diversity-Systemen, z.B. nach Fig. 4, sind die Empfangsantennen 5,5' und 5'' über einen Antennenumschalter 24, der von einem Störungsindikator gesteuert wird, über die HF-Verbindungsleitung 14 mit dem Überlagerungsempfänger 1 verbunden. Erfindungsgemäß wird im Diversitybetrieb das zwischenfrequente Signal 11 des Empfängers 1 dem Störungsindikator 25 über den über die zweite HF-Verbindungsleitung 23 verbundenen Umschalter 26 zugeführt. Störungsindikator 25 und Antennenumschalter 24 bilden den Diversityprozessor 30. Ist das aktuell aufgeschaltete Empfangssignal 13 gestört, erzeugt der Störungsindikator 25 ein Antennenumschaltsignal, welches dem Antennenumschalter 24 über einen weiteren Umschalter 26 in der Schaltungsanordnung 2 zugeführt wird. Im Funktionsprüfungsbetrieb wird im Empfänger ein Schaltsignalgenerator 31 aktiviert, welcher ein Schaltsignal 29 generiert. Dieses Schaltsignal 29 wird im einfachsten Fall durch eine Gleichspannung gebildet welche z.B. über eine hochfrequenzmäßig hochohmige Drossel auf den Innenleiter der zweiten HF-Verbindungsleitung 23 geschaltet wird.

In der Schaltungsanordnung 2 ist ein Schaltsignalauswerter 27 enthalten, welcher in einer besonders einfachen Ausführungsform als Komparator ausgeführt ist. Dieser stellt in der Schaltungsanordnung 2 das Schaltsignal 29 zur Umschaltung vom Diversitybetrieb in den Funktionsüberprüfungsbetrieb zur Verfügung. Im letzteren Fall wird im empfängerseitigen Umschalter 26 nun anstelle des ZF-Signals 11 das Oszillatorsignal 8 auf die zweite HF-Verbindungsleitung geschaltet. Im schaltungsanordnungsseitigen Umschalter 26 wird die Verbindung zum Störungsindikator 25 unterbrochen und eine Verbindung zum Frequenzumsetzer 3 hergestellt. Um nun die Funktionsüberprüfung mit verschiedenen Empfangsantennen durchführen zu können, wird im Schaltsignalgenerator 31, z.B. durch Codierung eines besonderen Schaltsignals, eine sequentielle Weiterschaltung des Antennenumschalters 24 bewirkt, wobei die Decodierung des Schaltsignals im Schaltsignalauswerter 27 erfolgt. Hierbei wirkt dieses besondere Schaltsignal nur auf den weiteren Umschalter 26 in der Schaltungsanordnung 2, der in Fig. 4 links vom Schaltsignalauswerter 27 dargestellt ist..

Der empfängerseitige Umschalter 26 kann durch einen einfachen Ein/Aus-Schalter ersetzt werden, über den lediglich das Oszillatorsignal im Funktionsüberprüfungsbetrieb dem ZF-Signal zugeschaltet wird. Dies kann immer dann der Fall sein, wenn der Oszillatorsignalpegel deutlich größer als der ZF-Pegel ist.

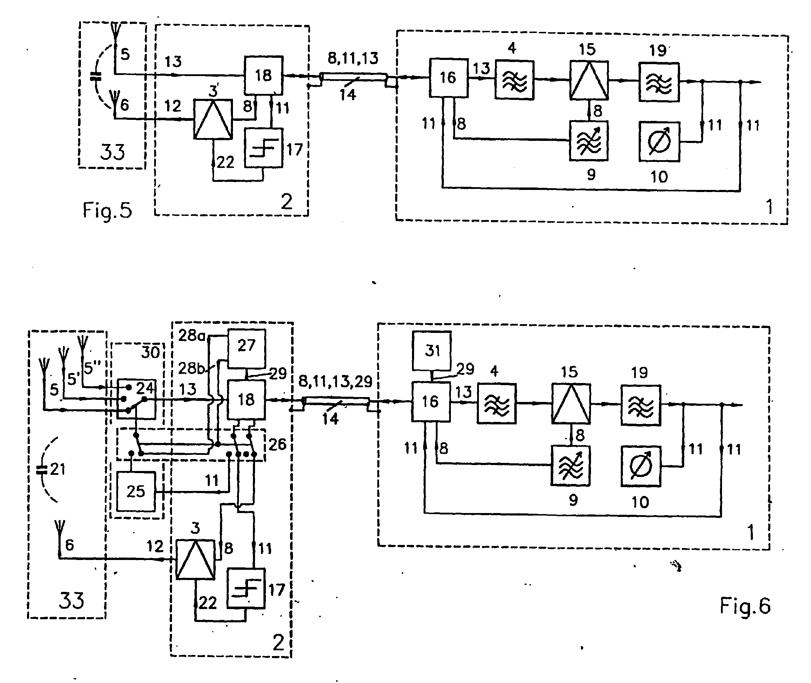

In Fig. 5 und Fig. 6 sind Ausführungsformen des Erfindungsgedankens für Einzel- bzw. Mehrantennendiversity-Empfangsanlagen dargestellt, bei denen nur eine einzige HF-Verbindungsleitung 14 existiert. Durch Verwendung nur einer einzigen HF-Verbindungsleitung wird die Funktionssicherheit der Gesamtempfangsanlage erhöht, da weniger Hochfrequenz-Steckkontakte erforderlich sind. Zudem ist eine solche Ausführungsforin wesentlich kostengünstiger, da der Mehraufwand für die zweite HF-Verbindungsleitung entfällt. Da nun mehrere HF-Signale über die HF-Verbindungsleitung geführt werden müssen, sind sowohl empfängerseitige als auch schaltungsanordnungsseitige Signalweichen 16 bzw. 18 erforderlich, um eine gegenseitige Beeinflussung der Signale zu vermeiden.

Aus Mehrantennen-Scanning-Diversity-Systemen sind solche Signalweichen bekannt. Nach dem Stande der Technik wird dabei im Diversitybetrieb das ZF-Signal zusätzlich zum Empfangssignal über nur eine HF-Verbindungsleitung geführt. Des weiteren kann darüberhinaus ein Schaltsignal über die HF-Verbindungsleitung geführt werden, welches vom Diversitybetrieb auf Einzelantennenempfang umschaltet.

Bei Anwendung des Erfindungsgedankens wird diesen Signalweichen eine zusätzliche Funktion übertragen, so daß eine Funktionsüberprüfung der Gesamtanlage erfolgen kann.

In beiden Figuren wird die Funktionsüberprüfung durch Selbsterregung, wie sie bei der Erläuterung der Figur 2 beschrieben ist, durchgeführt. Demzufolge muß im Fall des Einzelantennenempfangs das Empfangssignal, das Oszillatorsignal und das ZF-Signal über die wegen der guten Schirmungseigenschaften meist koaxial ausgeführte HF-Verbindungsleitung 14 geführt werden wobei beim Mehrantennendiversityempfang noch zusätzlich ein Schaltsignal 29, wie oben erläutert, übertragen wird. Die empfängerseitige Signalweiche 16 koppelt im Falle der Funktionsprüfung das Oszillatorsignal 8 und das ZF-Signal 11 auf die Koaxleitung 14 ein, während das HF-Empfangssignal 13 zum Empfänger durchgeschleift wird. An der schaltungsanordnungsseitigen Signalweiche 18 werden das ZF-Signal 11 und das Oszillatorsignal entnommen und dem Frequenzumsetzer 3 zugeführt. Das HF-Empfangssignal wird von der Empfangsantenne zur Koaxleitung durchgeschleift. Die Signalweichen sind dabei richtungsselektiv oder frequenzselektiv gestaltet. Zur Verbesserung der Selektionseigenschaften der Signalweichen können richtungsselektive Signalweichen in Form von Richtkopplern zusätzlich frequenzselektiv ausgeführt werden.

Bei Verwendung von Signalweichen nach dem Stande der Technik im Zusammenhang mit FM-Mehrantennen-Scanning-Diversity-Systemen kann die Ein- bzw. Auskopplung des Oszillatorsignals auf besonders einfache Weise mittels eines Serienresonanzkreises erfolgen. Über die bereits für die Ein- und Auskopplung erforderlichen Selektionsmittel für das ZF-Signal sind keine weiteren erforderlich, wenn der Oszillatorpegel auf der HF-Verbindungsleitung alle anderen Signale dominiert.

### Schaltungsanordnung zur Funktionsüberprüfung einer mobilen Rundfunkempfangsanlage

### Bezugszeichenliste:

- 1: Überlagerungsempfänger
- 2: Schaltungsanordnung
- 3: Frequenzumsetzer der Schaltungsanordnung
- 4: Spiegelfrequenzunterdrückung
- 5: Empfangsantenne, Empfangsantennen
- 6: Sendeantenne
- 7: ZF-Oszillator
- 8: Oszillatorsignal des Empfängers
- 9: Oszillator des Empfängers
- 10: Pegelmesser
- 11: ZF-Signal des Empfängers (nicht begrenzt)
- 12: HF-Ausgangssignal des Frequenzumsetzers 3 der Schaltungsanordnung 2
- 13: HF-Empfangssignal
- 14: Verbindungsleitung Empfänger-Schaltungsanordnung bzw Empfangsantenne
- 15: Empfängermischer
- 16: empfängerseitige Signalweiche
- 17: ZF-Begrenzer
- 18: schaltungsanordnungsseitige Signalweiche
- 19: ZF-Filter
- 20: Empfangsanlage komplett aus Antenne und Empfänger
- 21: kapazitive Kopplung Sende- Empfangsantenne
- 22: ZF-amplitudenbegrenztes Signal
- 23: 2. koaxiale Verbindungsleitung
- 24: Antennenumschlter
- 25: Störungsdetektor
- 26: Umschalter
- 27: Schaltsignalauswerter
- 28a,b: Schaltsignale für Umschalter
- 29: Schaltsignal
- 30: Diversity-Prozessor
- 31: Schaltsignalgenerator
- 32: ZF-Trägerschwingung
- 33: Koppeleinrichtung

## Patentansprüche

1. Mobile Rundfunk-Empfangsanlage mit mindestens einer Empfangsantenne, einschließend einen Überlagerungsempfänger, der mit der mindestens einen Empfangsantenne hochfrequenzmäßig verbunden ist, sowie
- mit einem variablen Oszillatorsignal,
- mit einem auf den jeweils gewählten Empfangskanal festgelegten ZF-Signal,
- mit Spiegelfrequenzunterdrückung (4) und
- mit einer Meßeinrichtung (10) zum Feststellen des Empfangspegels,
**gekennzeichnet durch die folgenden Merkmale:**
- in der Empfangsanlage (20) ist eine Schaltungsanordnung (2) mit einem Frequenzumsetzer (3) und einem innerhalb des jeweiligen Abstimmungsfrequenzbands variablen Oszillator (7) angeordnet, in der während der Funktionsprüfung das Oszillatorsignal (8) des Überlagerungsempfängers (1) vorhanden ist,
- der Oszillator (7) erzeugt eine ZF-Trägerschwingung (32) mit zeitlich konstanter Amplitude, deren Frequenz der dem jeweiligen Empfangskanal zugeordneten ZF-Mittenfrequenz möglichst nahe ist,
- der Frequenzumsetzer (3) erzeugt während der Funktionsprüfung aus dem frequenzvariablen Oszillatorsignal (8) des Überlagerungsempfängers (1) und der ZF-Trägerschwingung (32) ein HF-Ausgangssignal (12), dessen Frequenz der Empfangsfrequenz entspricht, auf die der Überlagerungsempfänger (1) jeweils aktuell abgestimmt ist,
- der Schaltung (2) und der mindestens einen Antenne (5) ist eine Koppeleinrichtung (33) zugeordnet, in der das HF-Ausgangssignal (12) mit definierter Amplitude lose auf die Empfangsantenne (5) gekoppelt und dem Überlagerungsempfänger (1) und der Meßeinrichtung (10) zugeführt wird,
- **durch** Feststellung des Pegels des Empfangspegels in der Meßeinrichtung (10) werden die Funktionen der Empfangsanlage (20) überprüft.

2. Mobile Empfangsanlage nach Anspruch 1, **dadurch gekennzeichnet, dass** die ZF- Trägerschwingung (32) durch Selbsterregung der Empfangsanlage (20) mit Schaltungsanordnung (2) in der Weise gebildet ist, dass das im ZF-Verstärkerteil des Überlagerungsempfängers (1) vorliegende, in seiner Amplitude begrenzte zwischenfrequente Signal (22) der Schaltungsanordnung (2) und dem darin befindlichen Frequenzumsetzer (3) zugeführt ist, und die Schleifenverstärkung hinreichend groß gewählt ist, damit der Zustand der Selbsterregung vorliegt.

3. Mobile Empfangsanlage mit von der mindestens einen Empfangsantenne (5) räumlich entferntem und mit ihr über eine HF-Verbindungsleitung (14) verbundenem Überlagerungsempfänger (1) nach einem der Ansprüche 1 bis 2, **dadurch gekennzeichnet, dass** die Schaltungsanordnung (2) im Überlagerungsempfänger (1) enthalten ist.

4. Mobile Empfangsanlage mit von der Empfangsantenne (5) räumlich getrenntem und über eine HF-Verbindungsleitung (14) verbundenem Überlagerungsempfänger (1) nach einem der Ansprüche 1 bis 2, **dadurch gekennzeichnet, dass** die Schaltungsanordnung (2) in der Nähe der Empfangsantenne (5) angeordnet ist, und daß während der Funktionsprüfung sowohl das Oszillatorsignal (8) des Überlagerungsempfängers (1) als auch das HF-Empfangssignal (13) über die HF-Verbindungsleitung (14) geführt ist.

5. Mobile Empfangsanlage nach einem der Ansprüche 1 bis 4, **dadurch gekennzeichnet, dass** die Koppeleinrichtung (33) aus einer Sendeantenne (6) oder aus einer mit der Empfangsantenne (5) verbundenen, kleinen Kapazität besteht, die gegebenenfalls an das Ende einer weiteren HF-Verbindungsleitung (23) angeschlossen ist und daß das HF-Ausgangssignal (12) des Frequenzumsetzers (3) über die Koppeleinrichtung (33) lose der Empfangsantenne (5) zugeführt ist.

6. Mobile Empfangsanlage nach einem der Ansprüche 1 bis 4, **dadurch gekennzeichnet, dass** die Koppeleinrichtung (33) aus einer an ihrem Ende abgeschlossenen, offenen HF-Leitung besteht, der das HF-Ausgangssignal (12) zugeführt ist, wobei das Ausgangssignal (12) kapazitiv oder induktiv auf die Empfangsantenne (5) oder deren Anschlußpunkt eingekoppelt ist.

7. Mobile Empfangsanlage nach einem der Ansprüche 5 und 6, **dadurch gekennzeichnet, dass** die Koppeleinrichtung (33) in der Nähe der Empfangsantenne (5) bei ESG -Scheiben in Siebdrucktechnik oder bei VSG-Scheiben als eingelegter Draht bzw. Drähte realisiert ist.

8. Mobile Empfangsanlage nach einem der Ansprüche 1 bis 7, **dadurch gekennzeichnet, dass** die Funktionsprüfung in einer Senderlücke durchgeführt wird, die über einen Suchlauf des Überlagerungsempfängers (1) durch Feststellung des Empfangspegels in Abhängigkeit von der Empfangsfrequenz ermittelt wird.

9. Mobile Empfangsanlage nach einem der Ansprüche 1 bis 8, **dadurch gekennzeichnet, dass**
- am Eingang des Überlagerungsempfängers (1) eine empfängerseitige Signalweiche (16) vorhanden ist, der das Oszillatorsignal (8) des Überlagerungsempfängers (1) und entweder das ZF-Signal (11) oder das in seiner Amplitude begrenzte ZF-Signal (22) zugeführt wird und daß dabei das HF-Empfangssignal (13) zum Überlagerungsempfänger (1) durchgeschleift wird,
- auf der HF-Verbindungsleitung (14) das HF-Empfangssignal (13) sowie das Oszillatorsignal (8) und entweder das ZF-Signal (11) oder das in seiner Amplitude begrenzte ZF-Signal (22) geführt werden und
- Schaltungsanordnungs-seitig eine Signalweiche (18) vorhanden ist, der das Oszillatorsignal (8) und entweder das ZF-Signal (11) oder das in seiner Amplitude begrenzte ZF-Signal (22) entnommen wird, und daß dabei das HF-Empfangssignal (13) von der mindestens einen Empfangsantenne (5) zur HF-Veibindungsleitung (14) durchgeschleift wird, und
- die Signalweichen derart gestaltet sind, dass die Signale sich nicht gegenseitig beeinflussen.

10. Mobile Empfangsanlage nach Anspruch 9, **dadurch gekennzeichnet, dass** mindestens eine der Signalweichen richtungsselektiv gestaltet ist.

11. Mobile Empfangsanlage nach Anspruch 9, **dadurch gekennzeichnet, dass** mindestens eine der Signalweichen frequenzselektiv gestaltet ist.

12. Mobile Empfangsanlage nach Anspruch 9, **dadurch gekennzeichnet, dass** mindestens eine der Signalweichen richtungsselektiv durch Richtkoppler und zur Unterstützung der Selektionseigenschaften zusätzlich frequenzselektiv gestaltet ist.

13. Mobile Empfangsanlage nach einem der Ansprüche 1 bis 12, mit Antennen-Scanning- Diversity-Funktion, bei der nur eine koaxiale HF-Verbindungsleitung (14) zwischen dem Diversity-Prozessor (30) und dem Überlagerungsempfänger (1) besteht, über die mittels einer Signalweiche (18) im Diversity-Prozessor und einer Signalweiche (16) im Überlagerungsempfänger ein Schaltsignal (29) und das ZF-Signal (11) vom Überlagerungsempfänger (1) zum Diversity-Prozessor (30) geführt wird, **dadurch gekennzeichnet, dass** im Falle der Funktionsprüfung zusätzlich zum ZF-Signal das Oszillatorsignal (8) des Überlagerungsempfängers über die koaxiale Verbindungsleitung (14) geführt wird, und daß der Oszillatorpegel so gewählt ist, dass über die bereits bestehenden Selektionsmaßnahmen in den Signalweichen keine weiteren Maßnahmen erforderlich sind.

## Claims

1. Mobile broadcast receiving system with at least one receiving aerial, including a superheterodyne receiver that is connected to at least one receiving aerial via high frequencies, and also with
- a variable oscillator signal,
- an intermediate frequency signal allocated to the selected individual receive channel,
- an image frequency rejection (4) and
- a measuring device (10) for determining the reception level,
**characterised by the following features:**
- the receiving system (20) contains a circuit configuration (2) with a frequency converter (3) and a variable oscillator (7) within the respective tuning frequency band; the oscillator signal (8) of the superheterodyne receiver (1) is present in this circuit configuration during the functional check;
- the oscillator (7) creates an intermediate frequency carrier wave (32) with a timely constant amplitude, whose frequency is as similar as possible to the centre frequency allocated to the respective receive channel,
- during the functional check, the frequency converter (3) creates a main frequency output signal (12) whose frequency is similar to the reception frequency to which the superheterodyne receiver (1) is currently tuned; this output signal is created from the frequency-variable oscillator signal (8) of the superheterodyne receiver (1) and the intermediate frequency carrier wave (32),
- a coupling device (33) in which the main frequency output signal (12) with selected amplitude is loosely coupled to the receiving aerial (5) and supplied to the superheterodyne receiver (1) and the measuring device (10) is allocated to the circuit (2) and to at least one aerial (5),
- the functions of the receiving system (20) are checked by determining the level of the reception level in the measuring device (10).

2. Mobile receiving system according to claim 1, **characterised by** the fact that the intermediate frequency carrier wave (32) is created by the self-excitation of the receiving system (20) with circuit configuration (2) is such a way that the intermediate frequency signal with limited amplitude (22) is present in the intermediate frequency amplifier unit of the superheterodyne receiver (1) and is supplied to the circuit configuration (2) and to the frequency converter (3) contained therein and that the loop gain is high enough so the state of self-excitation is existent.

3. Mobile receiving system with a superheterodyne receiver (1), which is spatially separated from the at least one receiving aerial (5) and connected to the system by means of a main frequency connecting line (14) according to the claims 1 to 2, **characterised by** the fact that the superheterodyne receiver (1) contains the circuit configuration (2).

4. Mobile receiving system with a superheterodyne receiver (1), which is spatially separated from the receiving aerial (5) and connected to the system by means of a main frequency connecting line (14) according to one of the claims 1 to 2, **characterised by** the fact that the circuit configuration (2) is located close to the receiving aerial (5) and that the oscillator signal (8) of the superheterodyne receiver (1) and the main frequency reception signal (13) are transmitted via the main frequency connecting line (14).

5. Mobile receiving system according to one of the claims 1 to 4, **characterised by** the fact that the coupling device (33) consists of a transmitting aerial (6) or a small capacitor connected to the receiving aerial (5) and, as the case may be, to the end of another main frequency connecting line (23) and that the main frequency output signal (12) of the frequency converter (3) is loosely transmitted to the receiving aerial (5) via the coupling device (33).

6. Mobile receiving system according to one of the claims 1 to 4, **characterised by** the fact that the coupling device (33) consists of a open main frequency line terminated at its end and to which the main frequency output signal (12) is transmitted and whereas the output signal (12) is launched capacitively or inductively to the receiving aerial (5) or its connection point.

7. Mobile receiving system according to one of the claims 5 and 6, **characterised by** the fact that the coupling device (33) is located close to the receiving aerial (5) with toughened glass discs in silk-screen printing technology or designed as wire and/or wires with laminated sheet glass discs.

8. Mobile receiving system according to one of the claims 1 to 7, **characterised by** the fact that the functional check is carried out in a channel gap, which is determined by a search run of the superheterodyne receiver (1) and by determining the reception level which depends on the reception frequency.

9. Mobile receiving system according to one of the claims 1 to 8, **characterised by** the fact that
- a receiver-sided signal splitter (16), to which the oscillator signal (8) of the superheterodyne receiver (1) or either the intermediate frequency signal (11) or the intermediate frequency signal with limited amplitude (22) is transmitted and thereby looping through the main frequency reception signal (13) to the superheterodyne receiver (1), is present at the input of the superheterodyne receiver (1),
- the main frequency reception signal (13) and the oscillator signal (8) or either the intermediate frequency signal (11) or the intermediate reception signal with limited amplitude (22) are transmitted via the main frequency connecting line (14) and
- that a signal splitter (18) is on the side of the circuit configuration from which the oscillator signal (8) and either the intermediate frequency signal (11) or the intermediate frequency signal with limited amplitude (22) are taken, and that the main frequency reception signal (13) is looped through to the main frequency connecting line (14) by at least one reception aerial (5), and
- that the signal splitters are configurated in such a way that the signals will not affect one another.

10. Mobile receiving system according to claim 9, **characterised by** the fact that at least one of the signal splitters has a direction-selective configuration.

11. Mobile receiving system according to claim 9, **characterised by** the fact that at least one of the signal splitters has a frequency-selective configuration.

12. Mobile receiving system according to claim 9, **characterised by** the fact that at least one of the signal splitters is configurated in a direction-selective way by means of a directional coupler and, in addition, in a frequency-selective way for supporting the selection features.

13. Mobile receiving system according to the claims 1 to 12, with aerial-scanning-diversity feature and with a coaxial main frequency connecting line (14) between the diversity processor (30) and the superheterodyne receiver (1); this line transmits a switching signal (29) and the intermediate frequency signal (11) from the superheterodyne receiver (1) to the diversity processor (30) via a signal splitter (18) in the diversity processor and a signal splitter (16) in the superheterodyne receiver, **characterised by** the fact that in case of a functional test and in addition to the intermediate frequency signal, the oscillator signal (8) of the superheterodyne receiver is transmitted via the coaxial connecting line (14) and that the oscillator level is selected in such a way that - apart from the selection measures already taken in the signal splitters - no other measures are required.

## Revendications

1. Installation de réception mobile comportant au moins une antenne réceptrice qui comprend un récepteur hétérodyne relié à haute fréquence avec au moins une antenne réceptrice, et
- avec un signal d'oscillateur,
- avec un signal FI fixé pour le canal de réception choisi,
- avec une inhibition de la fréquence-image (4) et
- avec un dispositif de mesure (10) pour la détermination du niveau de réception,
**caractérisée en ce que** :
- il est prévu dans l'installation de réception (20) une disposition de circuit (2) avec un convertisseur de fréquence (3) et un oscillateur (7) variable dans la plage de fréquences de syntonisation concernée, dans lequel le signal d'oscillateur (8) du récepteur hétérodyne (1) est présent pendant le contrôle du fonctionnement,
- l'oscillateur (7) produit une porteuse FI (32) d'amplitude constante dans le temps, dont la fréquence est aussi proche que possible de la fréquence moyenne en FI associée au canal de réception en question,
- le convertisseur de fréquences (3) génère pendant le contrôle du fonctionnement, à partir du signal d'oscillateur (8) à fréquence variable du récepteur hétérodyne (1) et de la porteuse FI (32), un signal de sortie HF (12) dont la fréquence correspond à la fréquence de réception sur laquelle le récepteur hétérodyne (1) est syntonisé à ce moment,
- il est prévu associé au circuit (2) et à l'antenne réceptrice (5) au nombre d'une au moins un dispositif de couplage (33) dans lequel le signal de sortie HF (12) est couplé de manière souple à l'antenne réceptrice (5) à une amplitude définie et transmis au récepteur hétérodyne (1) et au dispositif de mesure (10),
- la détermination du niveau de réception dans le dispositif de mesure (10) permet de contrôler les fonctions de l'installation de réception (20).

2. Installation de réception mobile selon la revendication 1, **caractérisée en ce que** la porteuse FI (32) est formée par auto-excitation de l'installation de réception (20) avec la disposition de circuit (2) de telle manière que le signal de fréquence intermédiaire (22) de la disposition de circuit (2) présent dans la partie d'amplificateur FI du récepteur hétérodyne (1) et dont l'amplitude est limitée est amené au convertisseur de fréquence (3) qui y est contenu, et l'amplification dans la boucle est suffisamment grande pour que l'état d'auto-excitation soit présent.

3. Installation de réception mobile avec un récepteur hétérodyne (1) éloigné dans l'espace de l'antenne réceptrice (5) au nombre d'une au moins et relié à elle par une ligne de communication HF (14) selon l'une des revendications 1 et 2, **caractérisée en ce que** la disposition de circuit (2) est contenue dans le récepteur hétérodyne (1).

4. Installation de réception mobile avec un récepteur hétérodyne (1) séparé dans l'espace de l'antenne réceptrice (5) et relié à elle par une ligne de communication HF (14) selon l'une des revendications 1 et 2, **caractérisée en ce que** la disposition de circuit (2) est disposée à proximité de l'antenne réceptrice (5) et **en ce que** pendant le contrôle du fonctionnement, le signal d'oscillateur (8) du récepteur hétérodyne (1) et le signal de réception HF (13) sont tous deux acheminés par la ligne de communication HF (14).

5. Installation de réception mobile selon l'une des revendications 1 à 4, **caractérisée en ce que** le dispositif de couplage (33) se compose d'une antenne émettrice (6) ou d'une petite capacité reliée à l'antenne réceptrice (5), qui est éventuellement connectée à une extrémité d'une autre ligne de communication HF (23), et **en ce que** le signal de sortie HF (12) du convertisseur de fréquence (3) est transmis de manière souple par le dispositif de couplage (33) à l'antenne réceptrice (5).

6. Installation de réception mobile selon l'une des revendications 1 à 4, **caractérisée en ce que** le dispositif de couplage (33) se compose d'une ligne HF ouverte terminée à son extrémité, à laquelle est amené le signal de sortie HF (12), lequel signal de sortie HF (12) est couplé de façon capacitive ou inductive à l'antenne réceptrice (5) ou à son point de connexion.

7. Installation de réception mobile selon l'une des revendications 5 et 6, **caractérisée en ce que** le dispositif de couplage (33) est réalisé à proximité de l'antenne réceptrice (5) par sérigraphie sur les vitres en verre trempé de sécurité ou sous la forme d'un fil ou de fils intégrés dans les vitres en verre feuilleté de sécurité.

8. Installation de réception mobile selon l'une des revendications 1 à 7, **caractérisée en ce que** le contrôle du fonctionnement est réalisé dans une lacune d'émission qui est déterminée par un cycle de recherche du récepteur hétérodyne par la détermination du niveau de réception en fonction de la fréquence de réception.

9. Installation de réception mobile selon l'une des revendications 1 à 8, **caractérisée en ce que** :
- il est prévu à l'entrée du récepteur hétérodyne (1) un aiguillage de signaux (16) du côté du récepteur, auquel sont transmis le signal d'oscillateur (8) du récepteur hétérodyne (1) et soit le signal FI (11), soit le signal FI d'amplitude limitée (22), et **en ce que** le signal de réception HF (13) est alors transmis en boucle au récepteur hétérodyne (1),
- le signal de réception HF (13) ainsi que le signal d'oscillateur (8) et soit le signal FI (11), soit le signal FI d'amplitude limitée (22) sont transmis sur la ligne de communication HF (14), et
- il est prévu du côté de la disposition de circuit un aiguillage de signaux (18) sur lequel sont captés le signal d'oscillateur (8) et soit le signal FI (11), soit le signal FI d'amplitude limitée (22), et le signal de réception HF (13) est alors transmis en boucle de l'antenne réceptrice (5) au nombre d'une au moins à la ligne de communication HF (14), et
- **en ce que** les aiguillages de signaux sont réalisés de telle manière que les signaux ne s'influencent pas réciproquement.

10. Installation de réception mobile selon la revendication 9, **caractérisée en ce que** l'un au moins des aiguillages de signaux est directionnel.

11. Installation de réception mobile selon la revendication 9, **caractérisée en ce que** l'un au moins des aiguillages de signaux est sélectif en fréquence.

12. Installation de réception mobile selon la revendication 9, **caractérisée en ce que** l'un au moins des aiguillages de signaux est conçu pour être directionnel par des coupleurs directionnels et pour être également sélectif en fréquence en vue de favoriser les propriétés de sélection.

13. Installation de réception mobile selon l'une des revendications 1 à 12 avec une fonction de diversité d'antennes à balayage, dans laquelle il n'est prévu qu'une ligne de communication HF (14) coaxiale entre le processeur de diversité (30) et le récepteur hétérodyne (1), qui transmet au moyen d'un aiguillage de signaux (18) dans le processeur de diversité et d'un aiguillage de signaux (16) dans le récepteur hétérodyne un signal de commutation (29) et le signal FI (11) du récepteur hétérodyne (1) au processeur de diversité (30), **caractérisée en ce que** lors d'un contrôle du fonctionnement, outre le signal FI, le signal d'oscillateur (8) du récepteur hétérodyne est transmis par la ligne de communication (14) coaxiale et le niveau de l'oscillateur et choisi de telle sorte que si des mesures de sélection existent déjà dans les aiguillages de signaux, aucune autre mesure n'est nécessaire.
